# EUROPEAN PATENT SPECIFICATION

(11) **EP 3 232 158 B1**
(45) Date of publication and mention of the grant of the patent: **26.01.2022**
(21) Application number: 15867777.3
(22) Date of filing: 04.09.2015
(51) Int. Cl.: G01C 21/26, G01C 21/34, G01C 21/36, G08G 1/005, G08G 1/13, G06Q 10/02, G06Q 10/04, G09B 29/00

(54) **INFORMATION PROCESSING DEVICE, CONTROL METHOD, AND PROGRAM**
INFORMATIONSVERARBEITUNGSVORRICHTUNG, STEUERUNGSVERFAHREN UND -PROGRAMM
DISPOSITIF DE TRAITEMENT D'INFORMATIONS, PROCÉDÉ DE COMMANDE ET PROGRAMME

(30) Priority: 09.12.2014 JP 2014248566
(43) Date of publication of application: 18.10.2017
(73) Proprietor: Sony Group Corporation, Tokyo 108-0075 (JP)
(72) Inventor: MUKAIYAMA, Ryo, Tokyo 108-0075 (JP); YAMAURA, Kenichi, Tokyo 108-0075 (JP); AOKI, Suguru, Tokyo 108-0075 (JP); MURAKOSHI, Sho, Tokyo 108-0075 (JP); TAMURA, Renji, Tokyo 108-0075 (JP)
(74) Representative: MFG Patentanwälte Meyer-Wildhagen Meggle-Freund Gerhard PartG mbB
(86) International application number: PCT/JP2015/075267
(87) International publication number: WO 2016/092920

(56) References cited:
- JP-A- 2007 066 106
- JP-A- 2013 513 797
- US-A1- 2007 050 131
- US-A1- 2011 087 426
- US-A1- 2013 198 281
- US-B2- 7 864 073

## Description

### Technical Field

The present disclosure relates to an information processing device, a control method, and a program.

### Background Art

In the past, technology that references map information to provide navigation guiding a user from a current location to a destination has been proposed. Regarding such navigation, besides navigation for use for automobiles, navigation for use with bicycles, motorcycles, and walking on foot have also been proposed.

For example, JP 2011-149778A below proposes a device that presents a route to a destination in accordance with a navigation mode, such as an automobile mode, a walking mode, or a bicycle mode.

US 7 864 073 B2 discloses an apparatus and a method of providing a schedule and a route in which the apparatus includes an information collection unit analyzing input information and extracting an event to be added to a first schedule, a pattern recognition unit extracting an activity pattern of a user with reference to a past route and past event information, and a generation unit applying the activity pattern to at least one event of the first schedule and the extracted event to generate a second schedule, generating a first route between event locations with reference to position information and time information of each event in the second schedule, generating a third schedule, to which an additional event is added, with reference to a transition time between the event locations and an actual event time, and generating a second route for the additional event in the third schedule.

US 2007/050131 A1 discloses a technology enabling proper navigation based on positional information of a visitor and a congested state. Readers provided in a plurality of locations within an object area read a piece of identifying information from a tag of a visitor, receive the identifying information from the reading device, an input of a destination of the visitor is received, by referring to a map information storage module stored with map information within the object area including the installing locations of the reading units, a present position of the visitor whose identifying information has been read is acquired, then a congested state is obtained from an information count of the identifying information read by each of the reading units, and a route to the destination from the present position of the visitor is acquired in a way that weights (a value of) the congested state to the map information.

### Disclosure of Invention

### Technical Problem

However, the navigation technology of the related art merely presents a route from the current location to the destination on the basis of existing map information, and does not discuss how to provide navigation specialized for an event being held over a wide area. Examples of events held over a wide area include sporting competitions such as the Olympics, music festivals, and the like. At such an event (the event in the broad sense), a user watches matches or views on-stage performances (events in the narrow sense) while moving around to sites scattered over a comparatively wide area, but since there are time constraints on the matches or performances, the user must move around while taking into consideration the start times and site locations.

Additionally, depending on the user, there may be circumstances in which the user wants to avoid taking stairs because the user is using a baby stroller, or demands in which the user wants to pass by a rest area along the way because the user is carrying many belongings. Thus, it is necessary to decide a route and select waypoints while also accounting for different conditions for individual users.

Accordingly, the present disclosure proposes an information processing device, a control method, and a program capable of providing navigation suited to a user for experiencing multiple events having time and location conditions.

### Solution to Problem

According to a first aspect, the present invention provides an information processing device in accordance with independent claim 1.

According to a second aspect, the present invention provides a control method in accordance with independent claim 13.

According to a third aspect, the present invention provides a program in accordance with independent claim 14.

Further aspects of the present invention are set forth in the dependent claims, the drawings and the following description.

### Advantageous Effects of Invention

According to the present disclosure as described above, it is possible to provide navigation suited to a user for experiencing multiple events having time and location conditions.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram summarizing an information processing system according to an embodiment of the present disclosure.
[FIG. 2] FIG. 2 is a block diagram illustrating an example of a configuration of a server according to an embodiment.
[FIG. 3] FIG. 3 is a diagram explaining the generation of POI information according to an embodiment.
[FIG. 4] FIG. 4 is a diagram illustrating example data of POI information stored in a POI information DB according to an embodiment.
[FIG. 5] FIG. 5 is a block diagram illustrating an example of a configuration of a user terminal according to an embodiment.
[FIG. 6] FIG. 6 is a flowchart illustrating a navigation process according to a first embodiment.
[FIG. 7] FIG. 7 is a diagram illustrating an example display of a navigation screen according to a first embodiment.
[FIG. 8] FIG. 8 is a flowchart illustrating a navigation process according to a second embodiment.
[FIG. 9] FIG. 9 is a flowchart illustrating a navigation process according to a third embodiment.
[FIG. 10] FIG. 10 is a diagram illustrating an example display of a navigation screen according to a third embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Hereinafter, the description will proceed in the following order.
1. Overview of information processing system according to embodiment of present disclosure
2. Basic configuration
   2-1. Configuration of server
   2-2. Configuration of user terminal
3. Embodiments
   3-1. First embodiment
   3-2. Second embodiment
   3-3. Third embodiment
4. Conclusion

### <<1. Overview of information processing system according to embodiment of present disclosure»

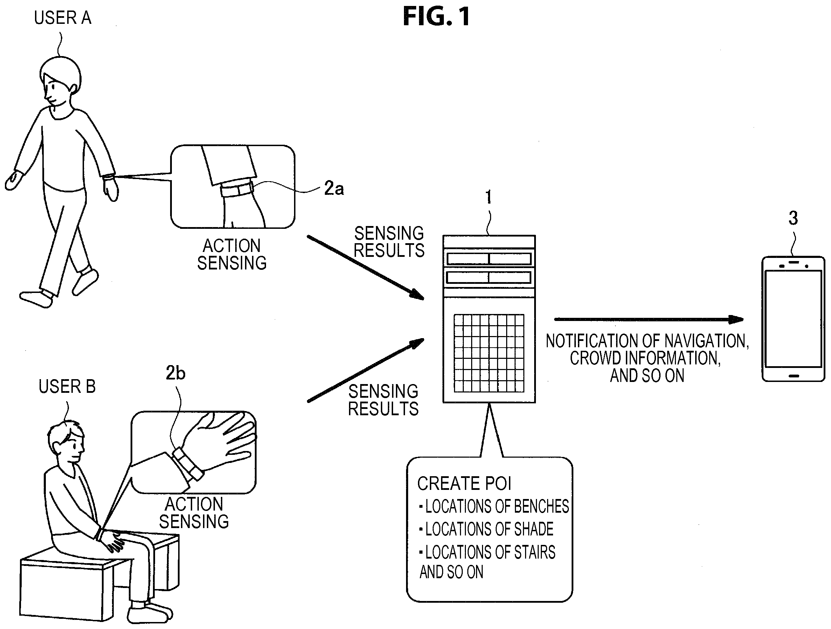

First, an overview of an information processing system according to an embodiment of the present disclosure will be described with reference to FIG. 1. As illustrated in FIG. 1, an information processing system according to the present embodiment includes wearable devices 2 (2a, 2b) worn by multiple users A and B, a server 1, and a user terminal 3 that provides navigation and crowd information notifications.

The wearable device 2 is realized by a smart band as illustrated in FIG. 1, for example. Components such as Global Positioning System (GPS) and acceleration sensors are installed onboard the wearable device 2, and a user's position information and movement are sensed. The wearable device 2 transmits the sensing results from these sensors to the server 1. In the server 1, action recognition is conducted on the basis of such sensing results, such as where a user was walking, where a user was ascending or descending stairs, where a user was sitting, and where a user boarded a train. Note that the wearable device 2 is not limited to a smart band as illustrated in FIG. 1, and may also be realized by a device such as a smartwatch, smart eyeglasses, or a smartphone, for example. In addition, the wearable device 2 may also connect to the user terminal 3 (such as a smartphone or tablet, for example) in a wired or wireless manner, and transmit sensing results via the user terminal 3.

The server 1 conducts action recognition on multiple users (for example, User A and User B), and from the action recognition results, generates high context. Subsequently, on the basis of the action recognition results and the high context, the server 1 generates point of interest (POI) information which is not included in typical existing map information. For example, the server 1 is able to generate, from the action recognition results and high context, spot information (that is, POI information) not included in existing map information, such as the locations of benches, the locations of stairs, the locations of temporary toilets, rest areas, temporary shops, eateries, kiosks, meeting places, and crowded locations. Additionally, the server 1 is also able to generate instantaneous information, such as locations which are currently crowded.

In addition, the server 1 is able to reference POI information not included in typical map information to provide suitable navigation to a destination and issue crowd information notifications to the user via the user terminal 3. Additionally, the destination is selected from among multiple events being held over a comparatively wide area (events in the narrow sense, such as sporting matches, performances, attractions, shows, and parades, for example), on the basis of the user's ticket information, input information, preference information, and the like. Since such events have time conditions (such as the start time of a match) as well as location conditions (such as where the event is held), the server 1 provides navigation suited to the user for experiencing multiple events by accounting for time and location conditions, and also referencing the above POI information.

The navigation provided by the server 1 is communicated to the user via the user terminal 3. The user terminal 3 may be realized by a smartphone as illustrated in FIG. 1, for example, but is not limited thereto, and may also be realized by a tablet, a mobile phone, a personal digital assistant (PDA), a personal computer (PC), a portable music player, a portable game console, or a wearable terminal (such as a head-mounted display (HMD), an eyeglasses-style HMD, a watch-style terminal, or a band-style terminal). Additionally, the user terminal 3 may also function as the wearable device 2 that senses the user's position and movement.

The above thus summarizes an information processing system according to an embodiment of the present disclosure. Next, a basic configuration of each device included in the information processing system of the present embodiment will be described.

### <<2. Basic configuration>>

### <2-1. Configuration of server>

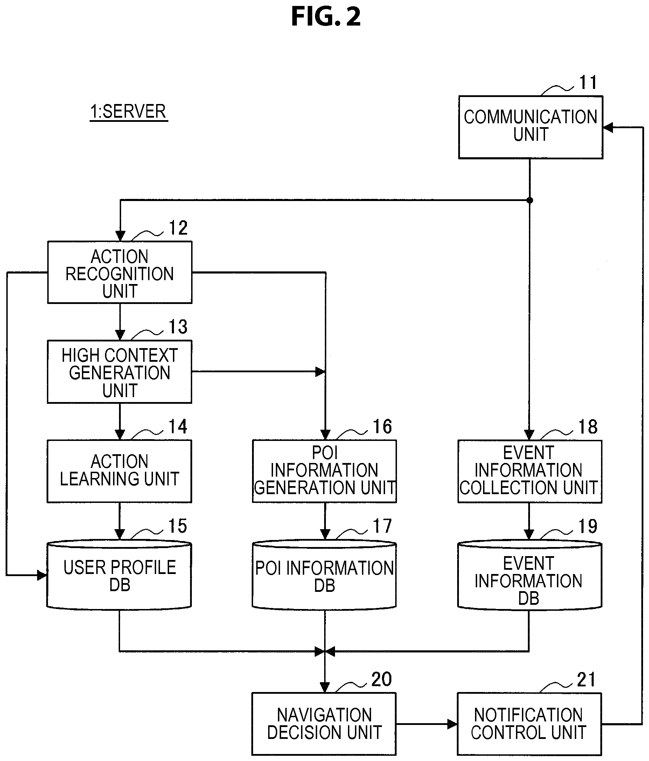

FIG. 2 is a block diagram illustrating an example of a configuration of the server 1 according to the present embodiment. As illustrated in FIG. 2, the server 1 includes a communication unit 11, an action recognition unit 12, a high context generation unit 13, an action learning unit 14, a user profile database (DB) 15, a POI information generation unit 16, a POI information DB 17, an event information collection unit 18, an event information DB 19, a navigation decision unit 20, and a notification control unit 21. Hereinafter, each component of the server 1 will be described.

The communication unit 11 connects to an external device in a wired or wireless manner, and includes a function of transmitting and receiving data. The communication unit 11 according to the present embodiment connects to the wearable device 2, for example, and receives sensing results of a user's position and movement. Also, the communication unit 11 connects to the user terminal 3 and transmits navigation information and crowd information.

The action recognition unit 12 recognizes a user's actions, on the basis of sensing results of the user's position and movement sensed by the wearable device 2. Specifically, the action recognition unit 12 recognizes states such as the user walking, running, ascending or descending stairs, ascending or descending a slope, a sitting state, a standing state, and the state of riding a vehicle (such as a bicycle, an automobile, or a train), and collects such states as metadata for individual locations in association with position information. Additionally, on the basis of environment information and position information sensed by an environment sensor onboard the wearable device 2, the action recognition unit 12 is also able to collect environment information associated with a location (such as the weather, temperature, humidity, sunshine (in the sun or in the shade), pollen, and atmospheric status (such as the degree of air pollution)). The action recognition unit 12 collects location metadata from many users, on the basis of the sensing results of the position and movement for many users.

The high context generation unit 13 generates location metadata with a high degree of abstraction, on the basis of the location metadata recognized by the action recognition unit 12. For example, on the basis of an action recognition result indicating that a user had been sitting down briefly at a certain location along a path, the high context generation unit 13 generates high context indicating that a bench exists at that location. Also, on the basis of an action recognition result indicating that a user is ascending or descending, the high context generation unit 13 generates high context indicating that stairs exist at that location.

In addition, the high context generation unit 13 references user profiles, and for a path taken by a wheelchair-bound user, for example, generates high context indicating that the location has few steps, while for a location where a user carrying many belongings sits down, generates high context indicating that the location is a rest area. Also, for a location where a user waited until another user arrived, the high context generation unit 13 generates high context indicating that the location is a meeting place.

The action learning unit 14 learns each user's actions, on the basis of user actions recognized by the action recognition unit 12, and high context (location data with a high degree of abstraction) generated by the high context generation unit 13. The learning results are output to the user profile DB 15. For example, if a user always avoids paths with stairs, the action learning unit 14 is able to learn preference information indicating that the relevant user prefers paths with no stairs. Also, if a user always walks along paths in the shade, the action learning unit 14 is able to learn preference information indicating that the relevant user prefers paths in the shade. Additionally, on the basis of user actions and high context, the action learning unit 14 is able to learn information such as the times and timings at which a user takes meals (eating habits), how often a user takes a rest, whether a user likes to walk, or whether a user often rides a taxi.

The user profile DB 15 stores learning results output from the action learning unit 14. Specifically, the user profile DB 15 stores preference information related to the actions of each user (such as whether the user does not like stairs, likes being in the shade, likes to walk, or likes to ride a taxi or bus). Additionally, besides the learning results output from the action learning unit 14, the user profile DB 15 may also store a user's interests and preferences (such as the food, sporting events, music, characters, and theme parks that the user likes), attributes (such as gender, age, and address), constraints (such as the presence or absence of a baby stroller, a handicap, or the current amount of belongings), and habits (such as the timings for taking meals, the frequency of taking a rest, and the wake-up time).

The POI information generation unit 16 conducts statistical processing using each piece of location metadata associating the actions of many users recognized by the action recognition unit 12 with position information and each piece of high context (location metadata with a high degree of abstraction) based on the actions of many users generated by the high context generation unit 13, and generates unique spot information, or in other words, POI information.

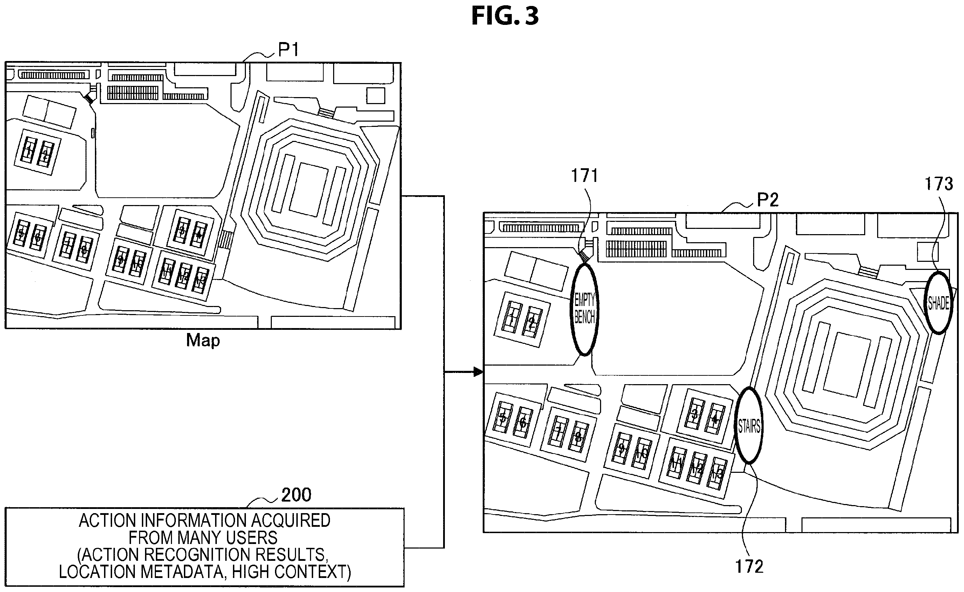

POI information according to the present embodiment includes spot information which is not included in typical existing map information. At this point, the generation of POI information according to the present embodiment will be described with reference to FIG. 3. FIG. 3 is a diagram explaining the generation of POI information according to the present embodiment. As illustrated in FIG. 3, the POI information generation unit 16 generates, on the basis of existing map information PI and action information 200 associated with position information acquired from many users (action recognition results, location metadata, and high context), POI information 171, 172, and 173 not included in the existing map information PI. For example, the POI information 171 is information indicating the location of a bench and the unoccupied status of the bench, while the POI information 172 is information indicating the location of stairs, and in addition, the POI information 173 is information indicating a location in the shade. Note that since the unoccupied status of a bench (an example of crowd information) and a location in the shade (an example of environment information) may change over time (that is, have a real-time property), the POI information generation unit 16 updates the POI information on the basis of the action information 200 continually acquired from many users, and thereby acquires up-to-date information about unoccupied benches, locations in the shade, and the like.

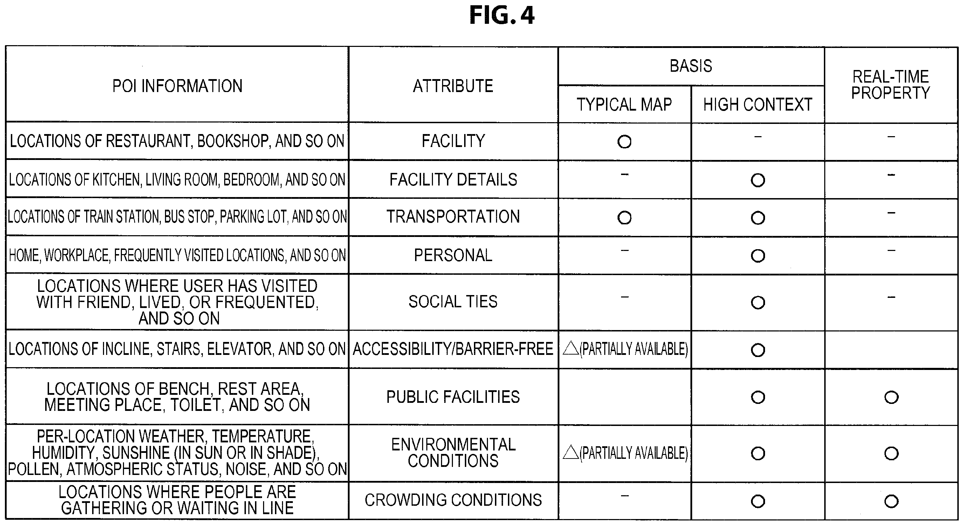

The POI information DB 17 is a storage unit that stores POI information generated by the POI information generation unit 16. At this point, example data of POI information will be described with reference to FIG. 4. FIG. 4 is a diagram illustrating example data of POI information stored in the POI information DB 17. As illustrated in FIG. 4, POI information refers to location information related to facilities (such as the location of a restaurant or a bookstore), location information related to facility details (such as the location of a kitchen, living room, or bedroom), or location information related to transportation (such as the location of a train station, bus stop, or parking lot), for example. Note that location information related to facilities and location information related to transportation may also be obtained from typical map information in some cases.

In addition, the POI information may also be location information individualized for each user, such as location information related to personal matters (such as the location of one's home, place of work, or frequently visited place), and location information related to social ties (such as a location where the user has visited with a friend, previously lived, or frequented).

In addition, the POI information may also be location information related to public facilities (such as the locations of benches, rest areas, meeting places, and toilets), location information related to environmental conditions (such as the weather, temperature, humidity, sunshine (in the sun or in the shade), pollen, atmospheric status, and noise pollution at individual locations), and location information related to crowding conditions (such as a location where people are gathering or waiting in line). Since such location information is POI information that changes over time, the POI information DB 17 is configured to store up-to-date location information that has been updated by the POI information generation unit 16.

The event information collection unit 18 collects information related to events, and outputs to the event information DB 19. More specifically, in the case of a sporting competition such as the Olympics, for example, the event information collection unit 18 receives information such as a user's schedule information, ticket purchase history, and ticket information via the communication unit 11, and on the basis of the received information, collects information about matches that the user is planning to watch (such as the locations where the matches are to be held and the start times). Also, in the case of a music festival, the event information collection unit 18 receives and collects information such as stage information, a performance program, and festival timetable information from the organizer via the communication unit 11. Also, in the case of a theme park, the event information collection unit 18 receives and collects information such as information about shows and parades, map information indicating the locations of attractions, eateries, and the like, and information about the park's hours of operation from the theme park side. In addition, the event information collection unit 18 receives information such as ticket information about tickets for attractions or shows possessed by the user, a ticket purchase history, or the like from the user terminal 3, and collects information about attractions that the user is planning to experience and shows that the user is planning to view (such as the location where the attractions or shows are to be held and the start times).

The event information DB 19 is a storage unit that stores information related to events collected by the event information collection unit 18.

The navigation decision unit 20 decides navigation indicating a path to respective events (such as sporting matches, musical stages, attractions, or shows) to enable the user to experience multiple events. If the user's ticket information or the like is available, for example, which events are to be experienced when and where has already been decided, and thus the multiple events to navigate are selected on the basis of the ticket information. On the other hand, if individual stages do not have tickets like at a music festival (that is, if all stages can be viewed with only an entrance ticket), the navigation decision unit 20 may select events (stages) to guide the user to in accordance with the user's interests and preferences acquired by the user profile DB 15. Also, when deciding a route, the navigation decision unit 20 provides navigation where and when to go in order to experience desired events, while also accounting for location and time conditions such as the holding locations and start times of multiple events.

Furthermore, the navigation decision unit 20 according to the present embodiment references POI information stored in the POI information DB 17 as well as constraints and preference information included in the user profile to decide a route suited to the user profile stored in the user profile DB 15, while also accounting for factors such as the accessibility and barrier-free nature of a location, environmental conditions, and crowding conditions. For example, if the navigation decision unit 20 learns from the user profile DB 15 that the user is using a baby stroller, the navigation decision unit 20 decides a route with few stairs and gentle gradients, as well as elevator access.

In addition, the navigation decision unit 20 according to the present embodiment may reference the POI information stored in the POI information DB 17 as well as the preference information and habits in the user profile to decide navigation that passes by ancillary activity spots, such as toilets, rest areas, kiosks, and eateries, along the way to the multiple events which are the destinations.

In addition, the navigation decision unit 20 according to the present embodiment references POI information stored in the POI information DB 17 to decide a route in accordance with current environmental conditions (such as sunshine, temperature, and humidity) and crowding conditions, and to select rest areas, toilets, kiosks, and eateries along the way. Consequently, the navigation decision unit 20 is able to guide the user to locations such as unoccupied rest areas, kiosks, and eateries.

In addition, it is also possible for the navigation decision unit 20 according to the present embodiment to reference POI information stored in the POI information DB 17 and the position information of other users visiting together with the user, and decide a route that passes by a meeting place.

The notification control unit 21 performs control to notify the user of the navigation decided by the navigation decision unit 20. Specifically, for example, the notification control unit 21 controls the transmission of navigation information to the user terminal 3 via the communication unit 11. Additionally, the notification control unit 21 may also include in the notification, together with the navigation information, the reason for deciding the navigation (a reason indicating why the route was decided) and the transit time for each spot included in the route. Additionally, since in some cases the navigation decided by the navigation decision unit 20 is generated by referencing POI information having a real-time property, such as crowding conditions, the notification control unit 21 may also conduct the navigation notification in real time.

In addition, the server 1 described above includes an onboard microcontroller equipped with a central processing unit (CPU), read-only memory (ROM), random access memory (RAM), and nonvolatile memory, which controls the respective components of the server 1.

Also, the configuration of the server 1 is not limited to the example illustrated in FIG. 2. For example, the action recognition unit 12 and the high context generation unit 13 of the server 1 may also be provided in the wearable device 2 or the user terminal 3.

### <2-2. Configuration of user terminal>

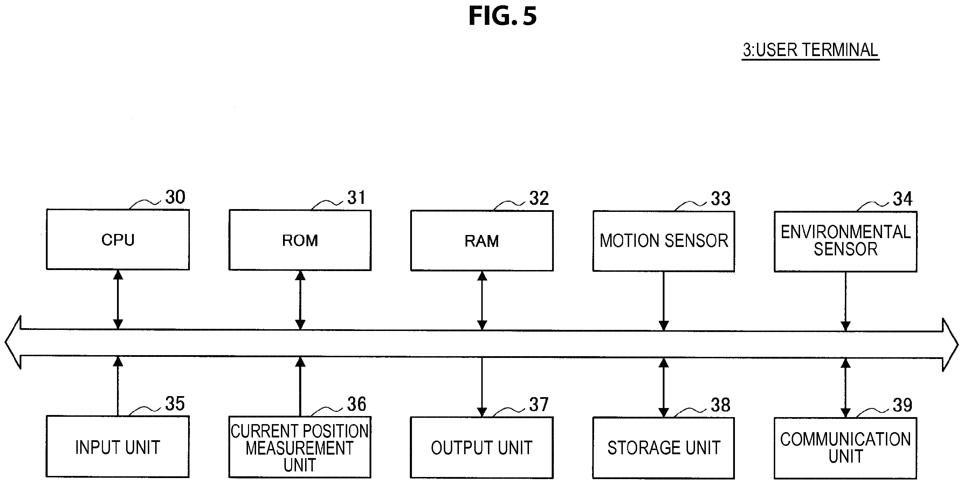

Next, a configuration of the user terminal 3 according to the present embodiment will be described with reference to FIG. 5. The user terminal 3 notifies the user of navigation, in accordance with control from the server 1. Note that the user terminal 3 according to the present embodiment may additionally function as the wearable device 2 illustrated in FIG. 1. The configuration of the user terminal 3 described next also includes the functions of the wearable device 2.

FIG. 5 is a block diagram illustrating an example of a configuration of the user terminal 3 according to the present embodiment. As illustrated in FIG. 5, the user terminal 3 includes a CPU 30, ROM 31, RAM 32, a motion sensor 33, an environment sensor 34, an input unit 35, a current position measurement unit 36, an output unit 37, a storage unit 38, and a communication unit 39.

The CPU 30 controls the respective components of the user terminal 3. Also, the CPU 30 functions as a computational processing device and a control device, and controls all or part of the operation inside the user terminal 3 by following various programs recorded in the ROM 31, the RAM 32, or the storage unit 38. The ROM 31 stores information such as programs and computational parameters used by the CPU 30. The RAM 32 temporarily stores information such as programs used during execution by the CPU 30, and parameters that change as appropriate during such execution.

The motion sensor 33 includes a function of sensing the motion of the user terminal 3. Specifically, the motion sensor 33 is realized by sensors such as a 3-axis acceleration sensor, a gyro sensor, a geomagnetic sensor, and a vibration sensor, for example, and utilizes the sensing data from these sensors to sense the user's movements (such as walking, running, sitting, standing, ascending or descending, and riding a vehicle). The data sensed by the motion sensor 33 (motion information) is transmitted from the communication unit 39 to the server 1.

The environment sensor 34 includes a function of sensing the environmental conditions around the user terminal 3. Specifically, the environment sensor 34 is realized by sensors such as a temperature sensor, a humidity sensor, a barometric pressure sensor, an illuminance sensor, a UV sensor, a pollen sensor, an air pollution sensor, and a noise sensor (microphone). The data sensed by the environment sensor 34 (environment information) is transmitted from the communication unit 39 to the server 1.

The input unit 35 detects an information input operation performed by the user, and outputs the detected input information to the CPU 30. For example, the input unit 35 is realized by a device such as a touch panel, a keyboard, a keypad, a button, or a switch. Also, by realizing the input unit 35 with a camera, gesture input becomes possible. Also, by realizing the input unit 35 with a microphone, voice input becomes possible. Additionally, the input unit 35 may be realized by multiple types of input devices.

The current position measurement unit 36 includes a function of sensing the current position of the user terminal 3 on the basis of an externally acquired signal. Specifically, for example, the current position measurement unit 36 is realized with a GPS positioning unit that receives radio waves from GPS satellites, detects the position where the user terminal 3 exists, and outputs the detected position information. In addition, other than GPS, the current position measurement unit 36 may also detect position by Wi-Fi (registered trademark), by transmitting or receiving information with a mobile phone, PHS, or smartphone, or by short-range communication or the like, for example. The current position information measured by the current position measurement unit 36 is transmitted from the communication unit 39 to the server 1.

The output unit 37 includes a function of conducting information output. For example, the output unit 37 is realized by a display unit that displays text, images, or other information on a screen, or by a speaker that plays back an audio signal. Additionally, the output unit 37 according to the present embodiment conducts display output or audio output to present, to the user, navigation information transmitted from the server 1.

The storage unit 38 stores various data, such as programs for executing respective processes in the CPU 30, for example. Additionally, the storage unit 38 may also store information such as a user's schedule information, ticket information, ticket purchase history, and user profile.

The communication unit 39 connects to an external device in a wired or wireless manner, and includes a function of transmitting and receiving data. The communication unit 39 according to the present embodiment connects to the server 1, for example, and in accordance with control by the CPU 30, transmits motion sensor values, environment sensor values, and current position information, or receives navigation information generated by the server 1.

The above thus specifically describes a configuration of the user terminal 3 according to the present embodiment. Note that the configuration of the user terminal 3 is not limited to the example illustrated in FIG. 5. For example, the user terminal 3 may also be configured so that the motion sensor 33, the environmental sensor 34, and the current position measurement unit 36 are provided in an external device (the wearable device 2 such as a smart band), and information is received from the external device by short-range wireless communication, for example, infrared communication, Wi-Fi (registered trademark), or Bluetooth (registered trademark)).

### <<3. Embodiments>>

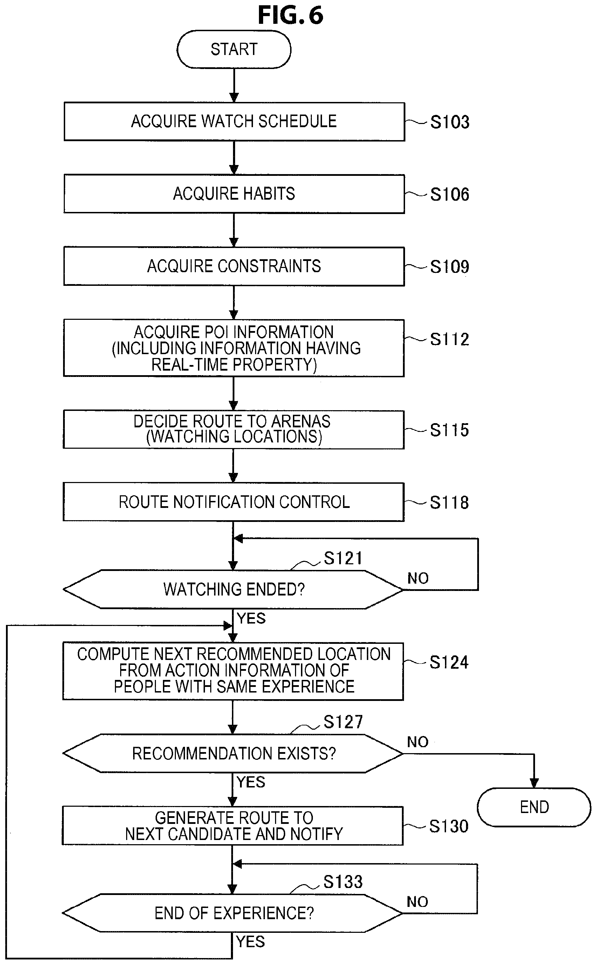

Next, respective embodiments of an information processing system according to the present disclosure will be described. The information processing system according to the present disclosure provides a user with navigation for experiencing multiple events. Herein, as examples, respective navigation for the cases of a sporting competition such as the Olympics, a music festival, and a theme park will be described specifically with respect to FIGS. 6 to 10.

### <3-1. First embodiment>

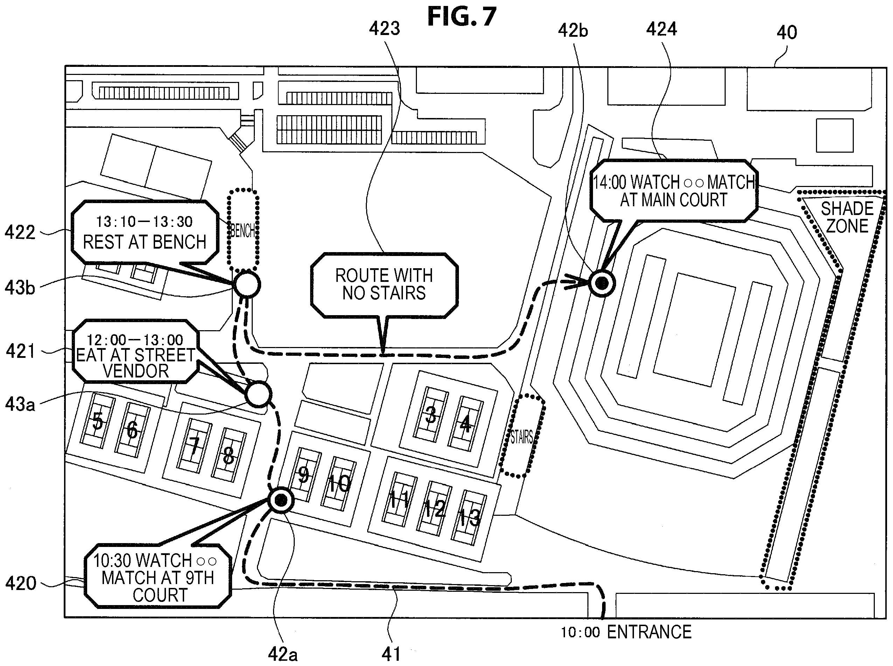

First, as a first embodiment, navigation for a sporting competition such as the Olympics will be described with reference to FIGS. 6 and 7. In a sporting competition such as the Olympics, it is anticipated that various contests are held in locations scattered over a comparatively wide area, and to watch a contest (match), it is necessary to purchase a ticket for each individual contest.

FIG. 6 is a flowchart illustrating a navigation process according to the first embodiment. As illustrated in FIG. 6, first, in step S103, the navigation decision unit 20 of the server 1 acquires a user's watch schedule. The user's watch schedule is acquired from ticket information about tickets purchased by the user, for example. The ticket information includes information indicating the tickets used to watch which matches held when and where. Such ticket information is extracted from the event information DB 19.

Next, in step S106, the navigation decision unit 20 acquires the user's habits. The user's habits refer to information such as the user's habitual eating times, preferred foods, how frequently the user takes rests, and shopping preferences, and are extracted from the user profile DB 15.

Next, in step S109, the navigation decision unit 20 acquires the user's constraints. The user's constraints refer to matters that act as constraints on deciding a route, such as if the user is using a baby stroller, sitting in a wheelchair, or carrying many belongings. The constraints are extracted from the user profile DB 15.

Next, in step S112, the navigation decision unit 20 acquires POI information (including information having a real-time property). As discussed earlier with reference to FIG. 4, POI information refers to spot information, such as the locations of facilities, the locations of slopes and stairs, the locations of benches and rest areas, and locations in the shade or in the sun. The POI information, by being generated by the POI information generation unit 16 from the action recognition results and high context of many users, includes information that is not included in typical map information (such as the locations of slopes and stairs, the locations of benches and rest areas, and locations in the shade or in the sun). Additionally, the POI information also includes information that is updated in real-time, such as crowd information for respective locations.

Next, in step S115, the navigation decision unit 20 decides a route for moving around to multiple arenas (watching locations) where the user is scheduled to watch matches, on the basis of the watch schedule, habits, constraints, and POI information acquired above. At this point, the navigation decision unit 20 is able to account for the user's constraints and decide an optimal route for the user, such as a route with no stairs or a route that passes by a rest area. Additionally, the navigation decision unit 20 is able to account for the user's habits and decide a route that passes by an eatery or kiosk at an appropriate time.

Next, in step S118, the notification control unit 21 performs control to notify the user of the route decided by the navigation decision unit 20. Specifically, the notification control unit 21 performs control to transmit navigation information indicating the decided route from the communication unit 11 to the user terminal 3, and provide the navigation to the user from the output unit 37 of the user terminal 3. Additionally, the notification control unit 21 may also perform control to additionally report the reason for the route decision and the transit time for spots along the way. At this point, an example of a navigation screen reported to the user on the user terminal 3 will be described with reference to FIG. 7.

FIG. 7 is a diagram illustrating an example display of a navigation screen according to the first embodiment. As illustrated in FIG. 7, on the navigation screen, a route 41 for successively watching multiple matches is indicated on a map image 40, for example. The route 41 is a route that goes from an entry location, to an arena 42a of a first match that the user is scheduled to watch, to an arena 42b of a second match. Also, as illustrated in FIG. 7, the route accounts for the user's habits and constraints, and passes by an eatery 43a and a rest area 43b. Furthermore, comments 420 to 424 indicating a description of each spot (such as "Watch match at 9th court", "Eat at street vendor", and "Rest on bench") and reasons for the route decision (such as "Route with no stairs selected", "Being in the shade prioritized", or "Slope prioritized") are presented. Also, in the comments 420 to 424, the start time of each match is accounted for, and time conditions such as the transit time and target arrival time for each spot are presented. As a result, by acting in accordance with the presented route and transit times, the user is able to move around to the matches that can be watched with the purchased tickets, while also taking appropriate meals and rests along the way. In addition, since a route corresponding to the user's profile (such as a route with no stairs, for example) is presented, the user is able to move more comfortably. Note that when the venue is a comparatively wide area, a route that moves to another arena by additionally taking a connecting train or bus may also be presented.

Next, returning to FIG. 6, in step S121, the navigation decision unit 20 determines whether or not watching matches has ended. The determination of the end of watching matches may be determined by the elapse of time. Also, in the determination of the end of watching matches, it may be determined by the elapse of time that the user has finished watching all of the multiple matches the user was scheduled to watch.

Next, if watching matches has ended (S121, "Yes"), in step S124, the navigation decision unit 20 computes the next recommended location from the action information of people who have had the same experience. In other words, the navigation decision unit 20 is capable of deciding new navigation (updating the navigation) after the user has watched the intended matches. For example, the navigation decision unit 20 decides as the next guided location (recommended location) a location where many other users who watched the same match as the user are gathered. This is because in such a location, there is a possibility that the watchers of the previous match may be enjoying a celebration such as a post-game party or a public viewing. In particular, post-game parties and public viewings do not require the purchase of a ticket in advance, and thus become candidates for recommended locations that the user may enjoy directly. Note that events such as matches that may be watched by purchasing a same-day ticket may also be treated as candidates for the next recommended location. Otherwise, the navigation decision unit 20 may also reference the user profile and decide, as the recommended location, a location where tourists from the same country or the same local region are gathering.

Next, if a recommended location (next guided location) exists (S127, "Yes"), in step S130, a route to the next candidate is generated by the navigation decision unit 20, and user notification control is performed by the notification control unit 21.

Next, after the experience at the next candidate ends (S133, "Yes"), the flow returns to S124 above, and the navigation update is repeated.

The above thus specifically describes a navigation operation process according to the first embodiment. Note that the processes from S103 to S112 above may also be performed in a different order, or in parallel. Also, the navigation update is not limited to the process discussed above (S124 to S133), and the navigation decision unit 20 may also update the route while the user is partway through moving around to multiple events in accordance with the navigation, depending on POI information indicating up-to-date crowding conditions and environmental conditions (such as sunshine and pollen). Additionally, if there is extra time until the next match, the navigation decision unit 20 may present to the user a location where people who watched the same match are gathering (such as a public viewing), on the basis of up-to-date action information, crowd information, and the like.

### <3-2. Second embodiment>

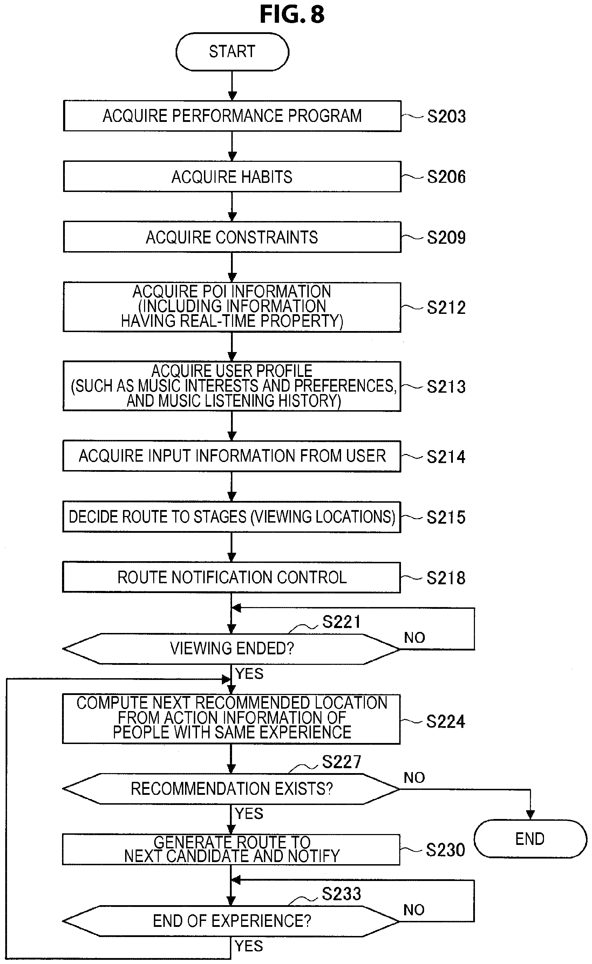

Next, as a second embodiment, navigation for an event such as a music festival will be described with reference to FIG. 8. In a music festival, it is anticipated that various performances are held on stages scattered over a comparatively wide area, but unlike a sporting competition such as the Olympics, individual tickets for viewing each performance are not necessary, and any stage performance may be viewed by simply purchasing an all-day pass for the music festival or the like.

Note that if a ticket is required to view each individual stage, when the user will view which stage is specified in advance on the basis of the ticket information, and thus this case may be accommodated by the navigation process described with reference to FIG. 6. On the other hand, in the present embodiment, since a ticket is not required to view each individual stage, the navigation process becomes a process for a case in which when the user will view which stage is not specified in advance.

### Hereinafter, such a case will be described specifically with reference to FIG. 8.

FIG. 8 is a flowchart illustrating a navigation process according to the second embodiment. As illustrated in FIG. 8, first, in step S203, the navigation decision unit 20 of the server 1 acquires a performance program. The performance program is acquired from the organizer of the music festival. The performance program is in other words a timetable for the music festival, and includes information indicating what kinds of performances are to be held when and at what stages. Such a performance program is extracted from the event information DB 19.

Next, in step S206, the navigation decision unit 20 acquires the user's habits.

Next, in step S209, the navigation decision unit 20 acquires the user's constraints.

Next, in step S212, the navigation decision unit 20 acquires POI information (including information having a real-time property).

Next, in step S213, the navigation decision unit 20 acquires a user profile from the user profile DB 15. The user profile is used when providing navigation for the music festival, and includes the user's music listening history and music preferences (such as genre and artist), for example. Additionally, from the user profile, the navigation decision unit 20 may also acquire information about how the user prefers to enjoy the music festival (such as whether the user prefers watching in the front, watching in the back, or watching in the front and watching in the back depending on the artist).

Next, in step S214, the navigation decision unit 20 acquires manual input information from the user. Specifically, for example, information such as information about the artists and music that the user prefers and which stages the user definitely wants to see may be input from the input unit 35 of the user terminal 3, and transmitted to the server 1. As discussed above, at an event with no individual tickets, such as a music festival, the stages that the user is to view are decided automatically from the user's preference information and the like, but the user may also specify stages by manual input.

Next, in step S215, the navigation decision unit 20 decides a route for moving around to multiple stages to be viewed by the user (viewing locations), on the basis of the performance program, habits, constraints, POI information, and user profile (such as music interests and preferences, music history) or manual input information (such as the specification of a stage) acquired above. At this point, the navigation decision unit 20 is able to decide an optimal route for the user that accounts for the user's constraints, such as a route with no stairs or a route that passes by a rest area. Additionally, the navigation decision unit 20 is able to account for the user's habits and decide a route that passes by an eatery or kiosk at an appropriate time. Note that the location of a rest area may be generated as POI information from the action recognition and high context of many users , but at an event such as an outdoor music festival, tents may be set up as overnight locations in some cases. Consequently, in the present embodiment, POI information that distinguishes between overnight locations and temporary rest areas may also be generated.

In addition, the navigation decision unit 20 may also decide, on the basis of the user profile, a route that considers the viewing position of the previous stage (such as a position close to the front row of the next stage), so that the user is able to arrive quickly at a stage where a preferred artist is performing.

Next, in step S218, the notification control unit 21 performs control to notify the user of the route decided by the navigation decision unit 20. Additionally, the notification control unit 21 may also perform control to additionally report the reason for the route decision (such as prioritizing being in the shade, or considering the movement distance to the next stage) and the transit time for spots along the way.

Next, in step S221, the navigation decision unit 20 determines whether or not viewing stages has ended. The determination of the end of viewing may be determined by the elapse of time. Also, in the determination of the end of viewing, it may be determined by the elapse of time that the user has finished viewing all of the multiple presented stages.

Next, if viewing has ended (S221, "Yes"), in step S224, the navigation decision unit 20 computes the next recommended location from the action information of people who have had the same experience. In other words, the navigation decision unit 20 is capable of deciding new navigation (updating the navigation) after the user has viewed the stage performances. As one example of a navigation update, the navigation decision unit 20 decides as the next guided location (recommended location) a location where many other users who viewed the same performance as the user are gathered. This is because in such a location, there is a possibility that an autograph session with the earlier performer, a merchandise sale, or the like is being conducted.

Next, if a recommended location (next guided location) exists (S227, "Yes"), in step S230, a route to the next candidate is generated by the navigation decision unit 20, and user notification control is performed by the notification control unit 21.

Next, after the experience at the next candidate ends (S233, "Yes"), the flow returns to S224 above, and the navigation update is repeated.

The above thus specifically describes a navigation operation process according to the second embodiment. Note that the processes from S203 to S214 above may also be performed in a different order, or in parallel. Also, the navigation update is not limited to the process discussed above (S224 to S233), and the navigation decision unit 20 may also update the route while the user is partway through moving around to multiple stages in accordance with the navigation, depending on POI information indicating up-to-date crowding conditions and environmental conditions (such as sunshine and pollen). Additionally, if there is extra time until the viewing of the next performance, the navigation decision unit 20 may present to the user a location where people who viewing the same performance are gathering, on the basis of up-to-date action information, crowd information, and the like.

### <3-3. Third embodiment>

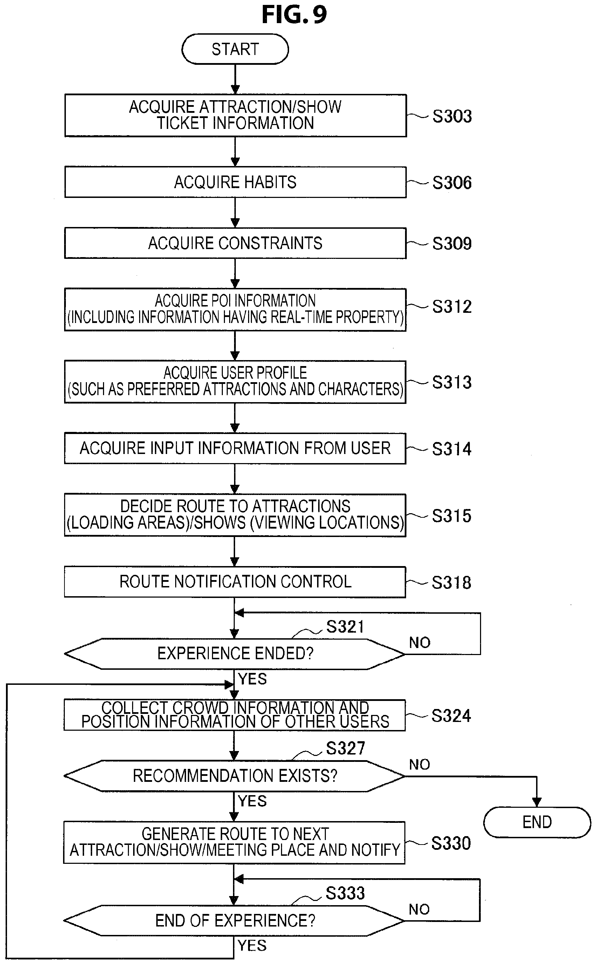

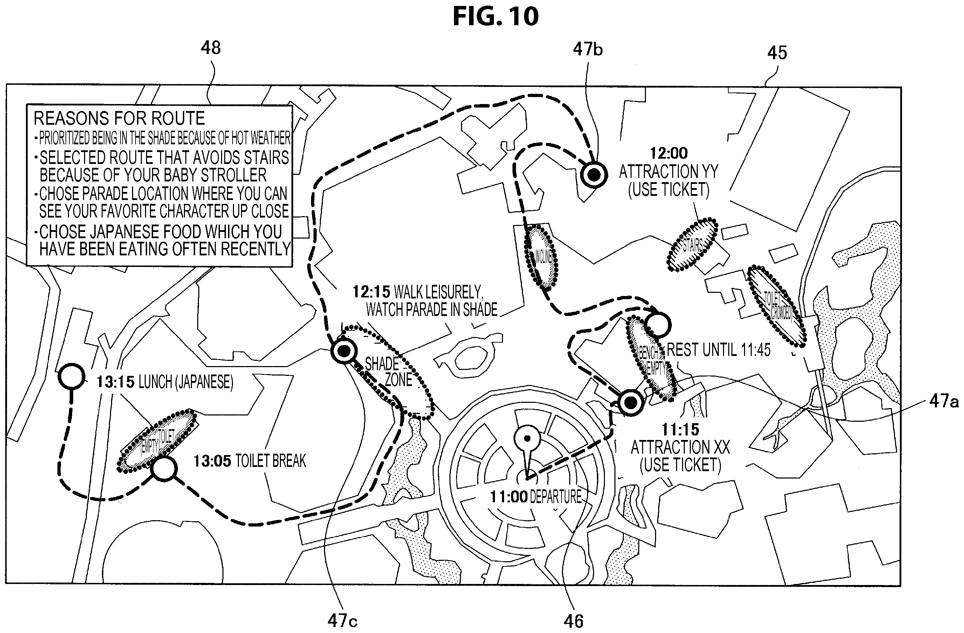

Next, according to a third embodiment not falling within the scope of the claimed subject-matter, navigation for a theme park will be described with reference to FIGS. 9 and 10. At a theme park, attractions are permanently installed at locations scattered over a comparatively wide area, while in addition, shows and parades are held irregularly at various locations inside the park. In addition, depending on the theme park, the user may be able to ride any attraction by simply purchasing an entry ticket such as an all-day pass, but since wait times occur for the attractions, time-specific tickets may also be distributed separately in some cases. The server 1 is able to determine which attractions the user is scheduled to ride at least, and also which shows the user is scheduled to view, on the basis of information about time-specified tickets to use for attractions and shows. Additionally, if there are no such tickets, the server 1 is able to determine which attractions the user at least wants to ride at least, and also which shows the user wants to view, on the basis of manual input information from the user.

FIG. 9 is a flowchart illustrating a navigation process according to the third embodiment. As illustrated in FIG. 9, first, in step S303, the navigation decision unit 20 of the server 1 acquires ticket information for attractions and shows.

Next, in step S306, the navigation decision unit 20 acquires the user's habits.

Next, in step S309, the navigation decision unit 20 acquires the user's constraints.

Next, in step S312, the navigation decision unit 20 acquires POI information (including information having a real-time property).

Next, in step S313, the navigation decision unit 20 acquires a user profile from the user profile DB 15. The user profile is used when providing navigation for the theme park, and includes information about the user's preferred attractions, shows, characters, and the like, for example. Additionally, from the user profile, the navigation decision unit 20 may also acquire information about how the user prefers to enjoy the theme park (such as whether the user prefers watching shows, riding attractions, watching in the front or in the back, whether the user dislikes waiting in line, and whether the user likes an attraction enough to wait in line).

Next, in step S314, the navigation decision unit 20 acquires manual input information from the user. Specifically, for example, information such as information about the attractions and shows that the user prefers and which attractions the user definitely wants to ride may be input from the input unit 35 of the user terminal 3, and transmitted to the server 1.

Next, in step S315, the navigation decision unit 20 decides an optimal route for the user, on the basis of the ticket information, habits, constraints, POI information, and user profile (such as preferred attractions and characters) or manual input information (such as attractions the user wants to ride) acquired above. Specifically, the navigation decision unit 20 ascertains the times of attractions and shows that the user is scheduled to experience on the basis of the ticket information, additionally ascertains the locations of the attractions and shows on the basis of map information for the theme park, and decides a route enabling the user to reach certain locations at certain times.

In addition, in the case of attractions and shows for which the user does not have a ticket, but which may still be experienced by waiting in line, the navigation decision unit 20 selects attractions and shows preferred by the user on the basis of the user profile or manual input information, and decides a route enabling the user to experience such attractions and shows in between the ticketed attractions and shows. At this point, the navigation decision unit 20 references real-time POI information such as crowding conditions and wait time conditions, and decides a route enabling the user to experience attractions and shows efficiently. Additionally, the navigation decision unit 20 may also reference real-time POI information such as crowding conditions and wait time conditions, and from a separately acquired past history of crowding conditions, decide a route prioritizing attractions and shows which are emptier than usual.

In addition, the navigation decision unit 20 decides an optimal route for the user that accounts for the user's constraints, such as a route with no stairs or a route that passes by a rest area. Additionally, the navigation decision unit 20 is able to account for the user's habits and decide a route that passes by an eatery or kiosk at an appropriate time.

Additionally, on the basis of the user profile, the navigation decision unit 20 may also decide a route that passes by a location where a preferred character appears. Additionally, when guiding the user to the viewing location of a parade or show, the navigation decision unit 20 is also able to guide the user to a location where a preferred character can be seen up close.

In addition, the navigation decision unit 20 is also able to account for the position information and route presented to a specific user specified for avoidance by the user, and decide a route that does not run into the specific user. As a result, the user is able to not run into acquaintances or work-related people at the theme park.

Next, in step S318, the notification control unit 21 performs control to notify the user of the route decided by the navigation decision unit 20. Additionally, the notification control unit 21 may also perform control to additionally report the reason for the route decision (such as prioritizing being in the shade, prioritizing empty attractions, or prioritizing a location where a preferred character appears) and the transit time for spots along the way. At this point, an example of a navigation screen reported to the user on the user terminal 3 will be described with reference to FIG. 10.

FIG. 10 is a diagram illustrating an example display of a navigation screen according to the third embodiment. As illustrated in FIG. 10, on the navigation screen, a route 41 for successively experiencing multiple attractions and shows is indicated on a map image 45, for example. The route 41 is a route that goes from a start point, to the loading area 47a of a first attraction that the user is scheduled to experience, to a second attraction loading area 47b, to a third show watching location 47c. Also, as illustrated in FIG. 10, the route accounts for the user's habits and constraints, and passes by an eatery and a rest area. Information about eateries and rest areas may be acquired from POI information generated on the basis of action information collected from many users.

Furthermore, on the navigation screen, comments indicating a description of each spot (such as Attraction XX - Use ticket, or Watch parade in the shade) and the reason for the route decision. For example, in the reason presentation image 48 in FIG. 10, the following are presented as the reasons for presenting the route 46: "Prioritized being in the shade because of hot weather. Selected route that avoids stairs because of your baby stroller. Chose parade location where you can see your favorite character up close. Chose Japanese food which you have been eating often recently."

Also, on the navigation screen, the specified time on the ticket for each attraction is accounted for, and time conditions such as the transit time and target arrival time for each spot are presented. As a result, by acting in accordance with the presented route and transit times, the user is able to move around to the attractions that can be ridden with the tickets in the user's possession, while also taking appropriate meals and rests along the way. In addition, since a route corresponding to the user's profile (such as a route with no stairs, for example) is presented, the user is able to move more comfortably.

Next, returning to FIG. 9, in step S321, the navigation decision unit 20 determines whether or not the experiencing of attractions and shows has ended. The determination of the end of experiencing may be determined by the elapse of time. Also, in the determination of the end of experiencing, it may be determined by the elapse of time that the user has finished experiencing all of the multiple presented attractions and shows.

Next, if experiencing has ended (S321, "Yes"), in step S324, the navigation decision unit 20 collects POI information indicating up-to-date crowding conditions and the like, and the position information of other users who arrived in the same group but are taking different actions, and computes the next navigation candidate. In other words, the navigation decision unit 20 is capable of deciding new navigation (updating the navigation) after the user has experienced the attractions and shows. For example, the navigation decision unit 20 decides as the next guided location (recommended location) a meeting place to meet a friend who arrived in the same group as the user, but who separated along the way to visit a different attraction. Additionally, the navigation decision unit 20 may also decide as the next guided location an empty attraction on the basis of crowding conditions.

Next, if a recommended location (next guided location) exists (S327, "Yes"), in step S330, a route to the next candidate (such as an attraction, show, or meeting place) is generated by the navigation decision unit 20, and user notification control is performed by the notification control unit 21.

Next, after the experience at the next candidate ends (S333, "Yes"), the flow returns to S224 above, and the navigation update is repeated.

The above thus specifically describes a navigation operation process according to the third embodiment. Note that the processes from S303 to S314 above may also be different performed in a different order, or in parallel. Also, the navigation update is not limited to the process discussed above (S324 to S333), and the navigation decision unit 20 may also update the route while the user is partway through moving around to multiple attractions and shows in accordance with the navigation, depending on POI information indicating up-to-date crowding conditions and environmental conditions (such as sunshine and pollen).

### <<4. Conclusion>>

As discussed above, in an information processing system according to an embodiment of the present disclosure, it is possible to provide navigation suited to a user for experiencing multiple events having time and location conditions.

Additionally, an information processing system according to an embodiment is able to decide a route suited to the user by referencing crowding conditions and sunshine conditions that vary from moment to moment, as well as POI information (spot information) not found on typical map information, such as the locations of stairs and benches, and also a user profile.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is possible to create a computer program for causing hardware such as a CPU, ROM, and RAM built into the server 1, the wearable device 2, and the user terminal 3 discussed earlier to exhibit the functionality of the server 1, the wearable device 2, and the user terminal 3. A computerreadable storage medium made to store such a computer program is also provided.

In addition, an information processing system according to an embodiment is not limited to a configuration including the server 1 and the user terminal 3 as illustrated in FIG. 1, and may also be realized by the user terminal 3. In other words, the user terminal 3 may be equipped with the configuration of the server 1 illustrated in FIG. 2, and in the user terminal 3, navigation may be decided and reported to the user.

Further, the effects described in this specification are merely illustrative or exemplified effects, and are not limitative. That is, with or in the place of the above effects, the technology according to the present disclosure may achieve other effects that are clear to those skilled in the art from the description of this specification.

(11)

### Reference Signs List

- 1: server
- 11: communication unit
- 12: action recognition unit
- 13: high context generation unit
- 14: action learning unit
- 15: user profile DB
- 16: POI information generation unit
- 17: POI information DB
- 18: event information collection unit
- 19: event information DB
- 20: navigation decision unit
- 21: notification control unit
- 2: wearable device
- 3: user terminal
- 30: CPU
- 31: ROM
- 32: RAM
- 33: motion sensor
- 34: environmental sensor
- 35: input unit
- 36: current position measurement unit
- 37: output unit
- 38: storage unit
- 39: communication unit

## Claims

1. An information processing device, comprising:
a decision unit (20) that decides, in accordance with location information and a user profile, navigation for experiencing a plurality of events having a time condition and a location condition;
a notification control unit (21) that controls a notification of the decided navigation;
**characterized in that**
the decision unit (20) determines whether the events have ended and, if the events have ended, computes, based on location information of users who experienced the events that have ended, a recommended location where the users who experienced the events that have ended are gathered.

2. The information processing device according to claim 1, wherein
the user profile includes a user's attribute information, preference information, a constraint, or a habit.

3. The information processing device according to claim 1, wherein
the time condition includes a start time or an end time of the event.

4. The information processing device according to claim 1, wherein
the location condition includes a location where the event is held.

5. The information processing device according to claim 1, wherein
the location information includes information that changes over time.

6. The information processing device according to claim 5, wherein
the location information that changes over time is environmental information or crowd information.

7. The information processing device according to claim 1, wherein
the decision unit (20) selects the plurality of events on a basis of ticket information, input information input by a user, or preference information included in the user profile.

8. The information processing device according to claim 1, wherein
the decision unit (20) decides navigation that passes by an ancillary activity spot along a way of moving around to the plurality of events.

9. The information processing device according to claim 8, wherein
the decision unit (20) selects the ancillary activity spot on a basis of the location information.

10. The information processing device according to claim 1, wherein
the notification control unit (21) controls an additional notification of a transit target time of each spot included on a route.

11. The information processing device according to claim 1, wherein
the notification control unit (21) controls an additional notification of a reason for deciding a route.

12. The information processing device according to claim 1, wherein
the notification control unit (21) controls the notification of the decided navigation in real time.

13. A control method, comprising:
deciding, in accordance with location information and a user profile, navigation for experiencing a plurality of events having a time condition and a location condition;
controlling a notification of the decided navigation; the method is further **characterized in that**
the deciding comprises determining whether the events have ended and, if the events have ended, computing, based on location information of users who experienced the events that have ended, a recommended location where the users who experienced the events that have ended are gathered.

14. A program comprising instructions which, when the program is executed by a computer, cause the computer to carry out the method of claim 13.

## Patentansprüche

1. Informationsverarbeitungsvorrichtung, umfassend:
eine Entscheidungseinheit (20), die gemäß Ortsinformationen und einem Nutzerprofil Navigation entscheidet zum Erfahren von mehreren Ereignissen mit einer Zeitbedingung und einer Ortsbedingung;
eine Benachrichtigungssteuereinheit (21), die eine Benachrichtigung der entschiedenen Navigation steuert;
**dadurch gekennzeichnet, dass**
die Entscheidungseinheit (20) bestimmt, ob die Ereignisse geendet haben, und, falls die Ereignisse geendet haben, auf Basis von Ortsinformationen von Nutzern, die die Ereignisse erfahren haben, einen empfohlenen Ort berechnet, wo sich die Nutzer, die die Ereignisse erfahren haben, das geendet hat, versammelt sind.

2. Informationsverarbeitungsvorrichtung nach Anspruch 1, wobei
das Nutzerprofil Attributinformationen eines Nutzers, Präferenzinformationen, eine Einschränkung oder eine Gewohnheit enthält.

3. Informationsverarbeitungsvorrichtung nach Anspruch 1, wobei
die Zeitbedingung eine Startzeit oder eine Endzeit des Ereignisses enthält.

4. Informationsverarbeitungsvorrichtung nach Anspruch 1, wobei
die Ortbedingung einen Ort enthält, wo das Ereignis abgehalten wird.

5. Informationsverarbeitungsvorrichtung nach Anspruch 1, wobei
die Ortsinformationen Informationen enthalten, die sich im Laufe der Zeit ändern.

6. Informationsverarbeitungsvorrichtung nach Anspruch 5, wobei
die Ortsinformationen, die sich im Laufe der Zeit ändern, Umweltinformationen oder Menschenmengeninformationen sind.

7. Informationsverarbeitungsvorrichtung nach Anspruch 1, wobei
die Entscheidungseinheit (20) die mehreren Ereignisse auf Basis von Ticketinformationen, durch einen Nutzer eingegebenen Eingabeinformationen oder in dem Nutzerprofil enthaltenen Präferenzinformationen wählt.

8. Informationsverarbeitungsvorrichtung nach Anspruch 1, wobei
die Entscheidungseinheit (20) eine Navigation entscheidet, die an einem untergeordneten Aktivitätspunkt entlang eines Wegs des Bewegens um die mehreren Ereignisse vorbeiführt.

9. Informationsverarbeitungsvorrichtung nach Anspruch 8, wobei
die Entscheidungseinheit (20) den untergeordneten Aktivitätspunkt auf Basis der Ortsinformationen wählt.

10. Informationsverarbeitungsvorrichtung nach Anspruch 1, wobei
die Benachrichtigungssteuereinheit (21) eine zusätzliche Benachrichtigung einer Durchreisezielzeit jedes auf einer Route enthaltenen Punkts steuert.

11. Informationsverarbeitungsvorrichtung nach Anspruch 1, wobei
die Benachrichtigungssteuereinheit (21) eine zusätzliche Benachrichtigung eines Grunds zum Entscheiden einer Route steuert.

12. Informationsverarbeitungsvorrichtung nach Anspruch 1, wobei
die Benachrichtigungssteuereinheit (21) die Benachrichtigung der entschiedenen Navigation in Echtzeit steuert.

13. Steuerverfahren, umfassend:
Entscheiden, gemäß Ortsinformationen und einem Nutzerprofil, einer Navigation zum Erfahren von mehreren Ereignissen mit einer Zeitbedingung und einer Ortsbedingung;
Steuern einer Benachrichtigung der entschiedenen Navigation;
wobei das Verfahren weiter **dadurch gekennzeichnet ist, dass**
das Entscheiden das Bestimmen umfasst, ob die Ereignisse geendet haben, und, falls die Ereignisse geendet haben, Berechnen, auf Basis von Ortsinformationen von Nutzern, die die Ereignisse erfahren haben, die geendet haben, eines empfohlenen Orts, wo die Nutzer, die die Ereignisse erfahren haben, die geendet haben, sich versammeln.

14. Programm umfassend Anweisungen, die, wenn das Programm durch einen Computer ausgeführt wird, bewirken, dass der Computer das Verfahren nach Anspruch 13 ausführt.

## Revendications

1. Dispositif de traitement d'informations, comprenant :
une unité de décision (20) qui décide, en fonction d'informations d'emplacement et d'un profil d'utilisateur, d'une navigation pour vivre une pluralité d'événements comportant une condition temporelle et une condition d'emplacement,
une unité de commande de notification (21) qui commande une notification de la navigation décidée ;
**caractérisé en ce que**
l'unité de décision (20) détermine que les événements ont pris fin ou non et, si les événements ont pris fin, calcule, en fonction d'informations d'emplacement d'utilisateurs qui ont vécu les événements qui ont pris fin, un emplacement recommandé où sont rassemblés les utilisateurs qui ont vécu les événements qui ont pris fin.

2. Dispositif de traitement d'informations selon la revendication 1, dans lequel
le profil d'utilisateur comporte des informations d'attributs, des informations de préférence, une contrainte ou une habitude de l'utilisateur.

3. Dispositif de traitement d'informations selon la revendication 1, dans lequel
la condition temporelle comporte une heure de début ou une heure de fin de l'événement.

4. Dispositif de traitement d'informations selon la revendication 1,
dans lequel la condition d'emplacement comprend un emplacement où se déroule l'événement.

5. Dispositif de traitement d'informations selon la revendication 1, dans lequel
les informations d'emplacement comprennent des informations qui changent au fil du temps.

6. Dispositif de traitement d'informations selon la revendication 5, dans lequel
les informations d'emplacement qui changent au fil du temps sont des informations environnementales ou des informations de foule.

7. Dispositif de traitement d'informations selon la revendication 1, dans lequel
l'unité de décision (20) sélectionne la pluralité d'événements en fonction d'informations de billets, d'informations saisies par un utilisateur ou d'informations de préférence incluses dans le profil d'utilisateur.

8. Dispositif de traitement d'informations selon la revendication l, dans lequel
l'unité de décision (20) décide d'une navigation qui passe par un lieu d'activité auxiliaire le long d'un chemin de déplacement vers la pluralité d'événements.

9. Dispositif de traitement d'informations selon la revendication 8, dans lequel
l'unité de décision (20) sélectionne le lieu d'activité auxiliaire en fonction des informations d'emplacement.

10. Dispositif de traitement d'informations selon la revendication l, dans lequel
l'unité de commande de notification (21) commande une notification supplémentaire d'un temps cible de transit de chaque lieu inclus dans un itinéraire.

11. Dispositif de traitement d'informations selon la revendication 1, dans lequel
l'unité de commande de notification (21) commande une notification supplémentaire indiquant un motif de décision d'itinéraire.

12. Dispositif de traitement d'informations selon la revendication 1, dans lequel
l'unité de commande de notification (21) commande la notification de la navigation décidée en temps réel.

13. Procédé de commande, comprenant :
la décision, en fonction d'informations d'emplacement et d'un profil d'utilisateur, d'une navigation pour vivre une pluralité d'événements comportant une condition temporelle et une condition d'emplacement ;
la commande d'une notification de la navigation décidée ;
le procédé étant **caractérisé en ce que**
la décision comprend la détermination que les événements ont pris fin ou non et, si les événements ont pris fin, le calcul, en fonction d'informations d'emplacement d'utilisateurs qui ont vécu les événements qui ont pris fin, d'un emplacement recommandé où sont rassemblés les utilisateurs qui ont vécu les événements qui ont pris fin.

14. Programme comprenant des instructions qui, à l'exécution du programme par un ordinateur, amènent l'ordinateur à mettre en œuvre le procédé selon la revendication 13.
